# EUROPÄISCHE PATENTSCHRIFT

(11) **EP 0 902 218 B1**
(45) Veröffentlichungstag und Bekanntmachung des Hinweises auf die Patenterteilung: **29.08.2001**
(21) Anmeldenummer: 98112105.6
(22) Anmeldetag: 01.07.1998
(51) Int. Cl.: F16H 61/36, F16H 59/04

(54) **Handschaltvorrichtung für ein Kraftfahrzeug**
Manual shifter device for an automotive vehicle
Sélecteur de vitesse manuel pour une automobile

(30) Priorität: 12.09.1997 DE 19740176
(43) Veröffentlichungstag der Anmeldung: 17.03.1999
(73) Patentinhaber: ZF Lemförder Metallwaren AG, 49441 Lemförde (DE)
(72) Erfinder: Ersoy, Metin, Dr., 65396 Walluf (DE)

(56) Entgegenhaltungen:
- EP-A- 0 032 883
- EP-A- 0 690 246
- EP-A- 0 803 664
- DE-A- 19 526 995
- US-A- 4 187 737
- US-A- 4 630 500

## Beschreibung

Die Erfindung betrifft eine Handschaltvorrichtung für ein Kraftfahrzeug vorzugsweise zum Einbau in das Armaturenbrett, die als Seilzug-Schaltvorrichtung ausgebildet ist.

Im Armaturenbrett integrierte Schaltvorrichtungen sind bereits bekannt. Sie haben einen relativ kurzen Schalthebel und ersetzen die sonst üblichen, am Bodenblech des Fahrzeuges befestigten Schaltvorrichtungen.

Bei einer Seilzug-Schaltvorrichtung zum Einbau in das Armaturenbrett treten im Vergleich zu einer Schaltvorrichtung, die am Fahrzeugboden angeordnet ist, andere kinematische und mechanische Verhältnisse auf. Da der hinter dem Armaturenbrett zur Verfügung stehende Bauraum geringer ist, gibt es zwei Möglichkeiten, die Wähl- und Schaltbewegungen in einer Schaltvorrichtung zu realisieren, zum einen mittels eines Kreuzgelenkes und zum anderen mittels eines Kugelgelenkes.

Bei der Kreuzgelenklösung ist eine von zwei rechtwinklig zueinander angeordneten Achsen, einseitig im Gehäuse gelagert. Je nachdem um welche Achse der Schalthebel verschwenkt wird, erfolgt nur eine der jeweiligen Schaltbewegung entsprechende Seilzugbetätigung. Beim Schalten bewegt sich der Wählzug nicht und beim Wählen bewegt sich der Schaltzug nicht.

Die einseitige Lagerung am Gehäuse birgt die Gefahr in sich, daß die Achsen verkanten. Deshalb finden in solchen Fällen Lösungen mit Nadellagern Anwendung, die aber recht kostenintensiv, zu platzintensiv und zu schwer für die Armaturentafel sind.

Es gibt ferner Kugelgelenklösungen, die verglichen mit Kreuzgelenkausführungen weniger Bauteile erfordern und einfacher und eleganter aufgebaut sind. Sie bieten funktionelle Vorteile, sind mit geringeren Kosten herstellbar und erfordern einen geringeren Platzbedarf im Fahrzeug.

Bei kugelgelagerten Schalthebeln werden am unteren Ende der Schalthebels zwei Zapfen angeschweißt, die orthogonal sowohl zueinander als auch zum Schalthebel angeordnet sind. Dieses Schalthebelende wird dann mit einem aus Kunststoff bestehenden Kugelgelenkgehäuse umgeben, aus dem die Zapfen durch entsprechende Schlitzöffnungen herausragen. Der Kugelzapfen im Inneren des Kugelgelenkgehäuses besitzt zwei Freiheitsgrade und nach außen hin entsprechende Ausgänge: ein Ausgang nach oben zum Schalthebel, einen zweiten Ausgang nach vorne zum Schaltzapfen und einen dritten Ausgang (um 90° versetzt) zum Wählzapfen. Am Schaltzapfen ist der Schaltseilzug und am Wählzapfen der Wählseilzug befestigt.

Der Nachteil bei einer derartigen Ausführung ist, daß das Kugelgelenkgehäuse durch Öffnungen, die in Form länglicher Schlitze ausgebildet sind und als Ausgänge für die Zapfen und den Schalthebel dienen, in seiner Stabilität geschwächt wird.

Aus der US 4,187,737 ist eine Handschaltvorrichtung für ein Kraftfahrzeug bekannt, die ein Schaltvorrichtungsgehäuse und einen Schalthebel mit einem an seinem unteren Ende vorhandenen Kugelgehäuse aufweist. Das Kugelgehäuse ist auf einen Kugelkopf eines ortsfest in das Schaltvorrichtungsgehäuse eingesetzten Kugelzapfens aufgesetzt. Ferner sind an dem Kugelgehäuse drei seitlich abragende und jeweils um 90° zueinander versetzt angeordnete Kugelzapfen zur Anbindung je eines Übertragungselementes vorhanden. Darüber hinaus ist das Kugelgehäuse unmittelbar auf den Kugelkopf aufgesetzt, sodass sich eine Stahl-auf Stahl-Lagerung ergibt, die keinerlei Schwingungs- oder Toleranzausgleich gestattet. Die in dieser Lösung beschriebene Handschaltvorrichtung weist zudem zahlreiche Bauteile auf, sodass ihr Aufbau aufwendig und ihre Herstellung damit kostenintensiv ist.

Aus der DE 195 26 995 A1 geht ebenfalls eine Handschaltvorrichtung für ein Kraftfahrzeug hervor, mit einem Schaltvorrichtungsgehäuse, einem Schalthebel, der an seinem unteren Ende ein Kugelgehäuse aufweist, das auf einen Kugelkopf eines ortsfest in das Schaltvorrichtungsgehäuse eingesetzten Kugelzapfens aufgesetzt ist. Im Unterschied zu der in der US 4,187,737 offenbarten Lösung ist hierbei an dem Kugelgehäuse ein seitlich ausragender Kugelzapfen zur Anbindung eines Übertragungsgliedes durch Montage befestigt. Zwischen dem Kugelkopf und dem Kugelgehäuse ist ferner eine Lagerschale eingesetzt, die jedoch keine ausreichende Entkopplung von fahrzeugbedingten Schwingungen oder einen Ausgleich bauteilbedingter Toleranzen ermöglicht. Zur Schwingungsisolierung bzw. als Spielausgleich des Schalthebels werden gemäß der DE 195 26 995 A1 zusätzliche Mittel erforderlich, die aus einer Gleitführung und einer Feder bestehen.

Der Erfindung liegt die Aufgabe zugrunde, eine einfache, kostengünstige, stabile und raumsparende Schalthebellagerung zu schaffen.

Die Erfindung löst diese Aufgabenstellung mit den Merkmalen des Patentanspruches 1 oder 2. Weitere Ausgestaltungen der Erfindung sind Gegenstand der Unteransprüche.

Eine erfindungsgemäße Handschaltvorrichtung, die vorzugsweise im Armaturenbrett installiert werden soll, besitzt einen Schalthebel, der an seinem oberen, dem Fahrzeugführer zugewandten Ende einen Schaltknauf und an seinem unteren Ende ein Kugelgehäuse aufweist. Der Schalthebel kann beispielsweise in das Kugelgehäuse eingepreßt oder eingeschrumpft sein. Auch eine einteilige Ausbildung von Schalthebel, Zapfen und Kugelgehäuse ist denkbar.

Das Kugelgehäuse weist wenigstens einen seitlich ausragenden, einteilig angeformten Hebelarm auf. Zweckmäßigerweise werden zur Übertragung der Wähl- und Schaltbewegungen des Schalthebels zwei Hebelarme, ein Wählhebelarm und ein Schalthebelarm vorgesehen, die vorzugsweise orthogonal zueinander stehen.

In diese Hebelarme können Zapfen eingepreßt oder eingespritzt werden, die vorzugsweise aus Stahl bestehen. Es liegt aber auch im Bereich des Erfindungsgedankens, die Zapfen bei entsprechender Materialwahl einteilig mit den Hebelarmen und dem Kugelgehäuse auszubilden. Als geeignete Materialien können beispielsweise Kunststoffe, Metalle, wie Aluminium oder Metall-Legierungen dienen.

An die an den Hebelarmen vorhandenen Zapfen werden die Übertragungsglieder zur Übertragung der Wähl- und Schaltbewegung des Schalthebels angebunden. Wenn die seitlich angeformten Hebelarme des Kugelgehäuses orthogonal zueinander stehen, verlaufen die Wähl- und Schaltachse auch entsprechend orthogonal zueinander. Während der Wählbewegung am Schalthebel wird ein Wählübertragungselement betätigt und während der Schaltbewegung ein Schaltübertragungselement. Das jeweils andere Übertragungselement wird nicht angesprochen.
Als Übertragungselemente sind zum Beispiel Seilzüge denkbar. Ebenso kann die Bewegung der Hebelarme elektronisch oder elektromagnetisch erfaßt und an das Getriebe übertragen werden.

Der Schalthebel ist mit der spährischen Lagerinnenfläche seines Kugelgehäuses unmittelbar elastisch auf einem Kugelkopf eines ortsfest in dem Schaltvorrichtungsgehäuse festgelegten Kugelzapfens aufgesetzt. Diese Kugelzapfen sind kostengünstig auch als Standardbauteile erhältlich. Verwendbar sind beispielsweise Kugelzapfen, wie sie auch in Kugelgelenken für Radaufhängungen in Kraftfahrzeugen zum Einsatz kommen.

Die Wählachse, die Schaltachse und die Mittelachse des ortsfesten Kugelzapfens schneiden sich in einem Punkt, nämlich in der geometrischen Mitte des Kugelkopfes.

Zwischen dem Kugelkopf und dem Kugelgehäuse kann eine Lagerschale, gegebenenfalls mit einem die Lagerschale unter Vorspannung haltenden Spannmittel vorgesehen werden. Dieses Spannmittel kann ein Sprengring sein. Die Lage des Sprengringes im Verhältnis zum Äquator des Kugelkopfes und die Auswahl des Sprengringes beeinflussen die Vorspannung der Lagerschale und somit das Losbrechmoment des Kugelgelenkes. Ein Entkopplungselement entkoppelt den Kugelzapfen vom Schaltvorrichtungsgehäuse und dient damit der Schall- und Schwingungsisolation. Es können zum Beispiel Hülsen aus Elastomer, Umspritzungen, Gummiringe oder dergleichen zum Einsatz kommnen.

Das Kugelgehäuse ist gegen ein Verdrehen um die Achse des ortsfesten Kugelzapfens gesperrt, indem einer von beiden Hebelarmen beziehungsweise einer der Zapfen im Schaltvorrichtungsgehäuse in einem Längsschlitz geführt wird.
Es ist aber auch möglich, sofern ein Umlenkhebel notwendig ist, daß dieser die Aufgabe der Führung übernimmt und einen der beiden Hebelarme beziehungsweise Zapfen in einer Bahn führt.

Eine erfindungsgemäße, bevorzugte Ausführungsform wird nachfolgend anhand der Zeichnungen beschrieben.

Es zeigen:
- **Figur 1:**: einen Schnitt durch eine erfindungsgemäße Handschaltvorrichtung
- **Figur 2:**: den Schnittverlauf II-II durch eine erfindungsgemäße Handschaltvorrichtung gemäß Figur 1
- **Figur 3:**: den Schnittverlauf III-III durch eine erfindungsgemäße Handschaltvorrichtung gemäß Figur 1

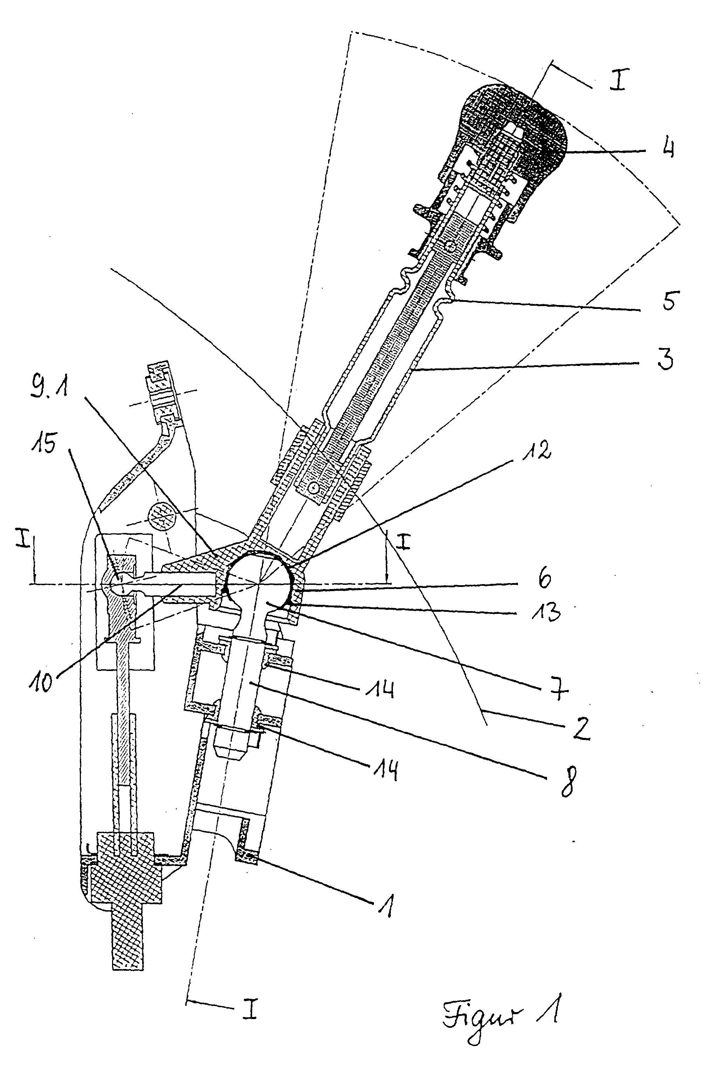

**Figur 1** zeigt eine erfindungsgemäße Handschaltvorrichtung für ein Kraftfahrzeug, die ein Schaltvorrichtungsgehäuse 1 mit einer Abdeckung 2 aufweist. Die Abdeckung 2 wird von einem Schalthebel 3 durchdrungen. Als Sichtschutz und zur Abdeckung der Schaltvorrichtungsmechanik ist zwischen Schalthebel 3 und Abdeckung 2 eine hier nicht gezeigte Manschette angeordnet. Am oberen, dem Fahrzeugführer zugewandten Ende ist der Schalthebel 3 mit einem Schaltknauf 4 versehen. Der Schalthebel 3 besitzt einen energie- und stoßabsorbierenden Deformationsabschnitt 5.

An seinem unteren Ende weist der Schalthebel 3 in diesem Ausführungsbeispiel ein Kugelgehäuse 6 auf. Das Kugelgehäuse 6 ist ein Aluminiumdruckgußteil, in welches der Schalthebel 3 eingeschrumpft wird.
Das Kugelgehäuse 6 besitzt eine spährische Lagerinnenfläche, die auf einen Kugelkopf 7 eines ortsfest in das Schaltvorrichtungsgehäuse 1 eingesetzten Kugelzapfens 8 aufgesetzt ist. Zwischen der spährischen Lagerinnenfläche des Kugelgehäuses 6 und dem Kugelkopf 7 ist eine Lagerschale 12 mit einem um Lagerschale 12 gelegten Spannmittel 13 vorgesehen.

An dem Kugelgehäuse 6 sind einteilig seitlich ausragende Hebelarme 9.1 und 9.2 angeformt, die orthogonal zueinander stehen.
In die Hebelarme 9.1 und 9.2 werden bei der dargestellten Ausführungsform Stahlzapfen eingepreßt. Der Hebelarm 9.1 dient als Schalthebelarm und der Hebelarm 9.2 als Wählhebelarm.

Der Schalthebel 3 wird durch den Fahrzeugführer während des Schalt- und Wählvorganges mit dem angeschrumpften Kugelgehäuse 6 um den Kugelkopf 7 des ortsfesten Kugelzapfens 8 verschwenkt. Während des Wählvorganges wird der Schalthebel 3 um eine Wählachse 10 geschwenkt und über einen in den Hebelarm 9.2 eingesetzten Wählzapfen 16 wird nur das Wählübertragungselement betätigt. Andererseits wird während des Schaltvorganges der Schalthebel 3 um eine Schaltachse 11 verschwenkt und über einen in den Hebelarm 9.1 eingesetzten Schaltzapfen 15 nur das Schaltübertragungselement betätigt.

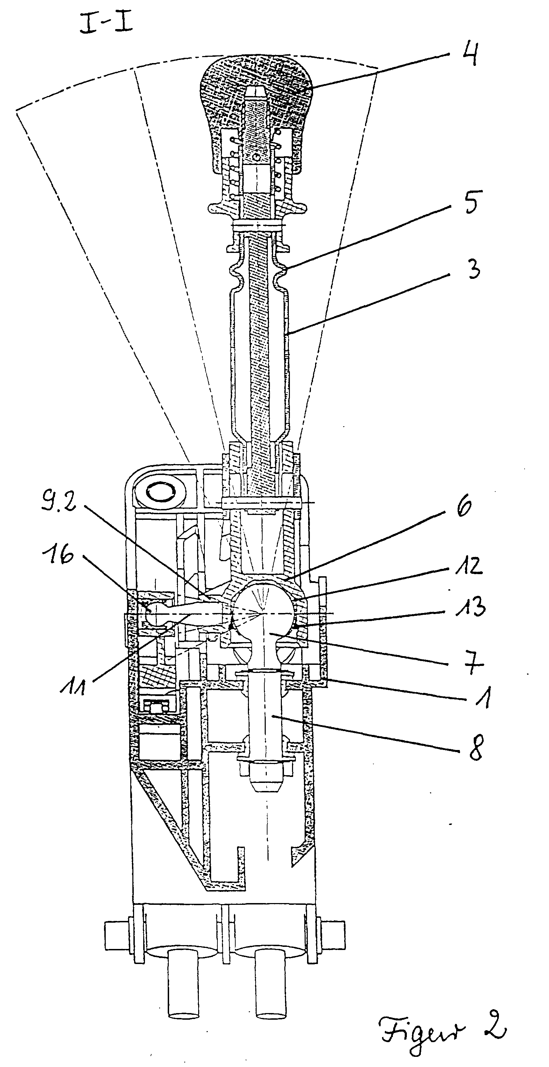

Die Schaltachse 11, der Hebelarm 9.2 und der Wählzapfen 16 sind in **Figur 2** gezeigt.

Der Schalthebel 3 ist mit der spährischen Lagerinnenfläche seines Kugelgehäuses 6 elastisch auf den Kugelkopf 7 des ortsfest in das Schaltvorrichtungsgehäuse 1 festgelegten Kugelzapfens 8 aufgesetzt. Zwischen dem Kugelkopf 7 und dem Kugelgehäuse 6 ist bei der gezeigten Ausführung die Lagerschale 12 und an dem Außenumfang der Lagerschale 12 das Spannmittel 13 eingesetzt. Dieses Spannmittel ist hier ein Sprengring. Die Lage des Sprengringes im Verhältnis zum Äquator des Kugelkopfes 7 und die Auswahl des Sprengringes beeinflussen die Vorspannung der Lagerschale 12 und somit das Losbrechmoment des Kugelgelenkes. Die Vorspannung kann so dosiert werden, daß ein gewünschtes Dreh- und Kippmoment des Schalthebels 3 erreicht werden kann, um dem Fahrzeugführer ein ergonomisches Schaltgefühl zu vermitteln.

Um die Handschaltvorrichtung von den Schwingungen des Getriebes und des Fahrzeuges zu entkoppeln, ist zwischen dem Schaltvorrichtungsgehäuse 1 und dem Kugelzapfen 8 ein Entkopplungselement 14 eingebracht. Dieses Entkopplungselement 14 ist in diesem Ausführungsbeispiel eine Gummihülle. Sie dient der Schwingungs- und der Schallisolierung sowie dem Toleranzausgleich.

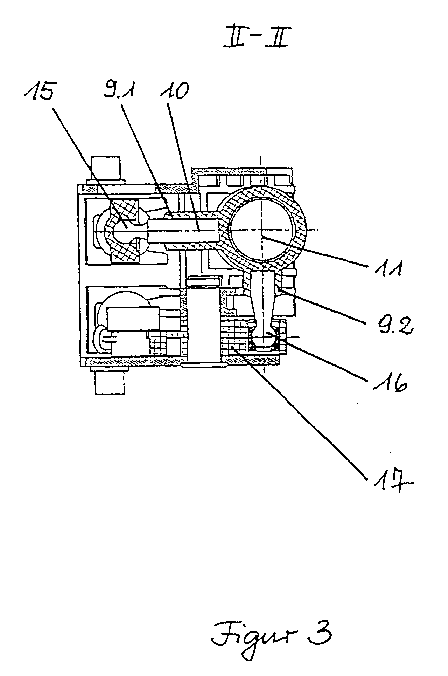

**Figur 3** zeigt die orthogonale Stellung der Hebelarme 9.1 und 9.2 zueinander. In den Hebelarm 9.1 ist der Zapfen eingebracht, der als Schaltzapfen 15 dient und in den Hebelarm 9.2 ist der Zapfen eingebracht, der als Wählzapfen 16 dient.
Die Wählachse 10, die Schaltachse 11 und die Mittelachse des ortsfesten Kugelzapfens 8 schneiden sich in einem Punkt, nämlich in der geometrischen Mitte des Kugelkopfes 7.

Das Kugelgehäuse 6 wird in diesem Ausführungsbeispiel gegen ein Verdrehen um die Mittelachse des ortsfesten Kugelzapfens 8 gesperrt, indem bedingt durch den geforderten Seilweg eines der angebundenen Übertragungselemente, ein Umlenkhebel 17 eingesetzt wird, der die Aufgabe der Führung des Hebelarmes 9.2 beziehungsweise des Wählzapfens 16 übernimmt und ihn in einer konkreten Bahn führt.

Die in der Erfindung vorgestellte Lösung nutzt die funktions-, kosten- und raumbedingten Vorteile einer Kugellagerung eines Schalthebels. Der Schalthebel bewegt die mit seinem unteren Ende verbundene Kugelgehäuse des Kugelgelenkes auf der ortsfest in das Gehäuse der Schaltvorrichtung installierten Kugel.

### Bezugszeichenliste

- 1: Schaltvorrichtungsgehäuse
- 2: Abdeckung
- 3: Schalthebel
- 4: Schaltknauf
- 5: Deformationsabschnitt
- 6: Kugelgehäuse
- 7: Kugelkopf
- 8: Kugelzapfen
- 9.1: Hebelarm
- 9.2: Hebelarm
- 10: Wählachse
- 11: Schaltachse
- 12: Lagerschale
- 13: Spannmittel
- 14: Entkopplungselement
- 15: Schaltzapfen
- 16: Wählzapfen
- 17: Umlenkhebel

## Patentansprüche

1. Handschaltvorrichtung für ein Kraftfahrzeug, mit einem Schaltvorrichtungsgehäuse und einem Schalthebel (3), der an seinem unteren Ende ein Kugelgehäuse (6) aufweist, das auf einen Kugelkopf (7) eines ortsfest in das Schaltvorrichtungsgehäuse (1) eingesetzten Kugelzapfens (8) aufgesetzt ist und an dem zwei seitlich ausragende Hebelarme (9.1, 9.2) zur Anbindung je eines Übertragungsgliedes einstückig angeformt sind, wobei in die Hebelarme (9.1 und 9.2) Kugelzapfen (15, 16) zur Anbindung von Übertragungsgliedern eingebracht sind und zwischen dem Kugelkopf (7) und dem Kugelgehäuse (6) eine begrenzt elastische Lagerschale (12) sowie ein die Vorspannung der Lagerschale (12) beeinflussendes Spannmittel (13) eingesetzt sind und der ortsfeste Kugelzapfen (8) in dem Schaltvorrichtungsgehäuse mittels wenigstens eines Entkopplungselementes (14) gegenüber dem Schaltvorrichtungsgehäuse (1) toleranzausgleichend und schwingungsisoliert festgesetzt ist.

2. Handschaltvorrichtung für ein Kraftfahrzeug, mit einem Schaltvorrichtungsgehäuse und einem Schalthebel (3), der an seinem unteren Ende ein Kugelgehäuse (6) aufweist, das auf einen Kugelkopf (7) eines ortsfest in das Schaltvorrichtungsgehäuse (1) eingesetzten Kugelzapfens (8) aufgesetzt ist und an dem zwei seitlich ausragende Hebelarme (9.1, 9.2) zur Anbindung je eines Übertragungsgliedes einstückig angeformt sind, wobei an den Hebelarmen (9.1 und 9.2) Kugelzapfen (15, 16) zur Anbindung von Übertragungsgliedern angeformt sind und zwischen dem Kugelkopf (7) und dem Kugelgehäuse (6) eine begrenzt elastische Lagerschale (12) sowie ein die Vorspannung der Lagerschale (12) beeinflussendes Spannmittel (13) eingesetzt sind und der ortsfeste Kugelzapfen (8) in dem Schaltvorrichtungsgehäuse mittels wenigstens eines Entkopplungselementes (14) gegenüber dem Schaltvorrichtungsgehäuse (1) toleranzausgleichend und schwingungsisoliert festgesetzt ist.

3. Handschaltvorrichtung für ein Kraftfahrzeug nach Anspruch 1 oder 2,
**dadurch gekennzeichnet**, daß
das Kugelgehäuse (6) gegen ein Verdrehen um die Achse des ortsfesten Kugelzapfens (8) dadurch gesperrt ist, daß wenigstens einer der beiden Hebelarme beziehungsweise einer der Kugelzapfen in dem Schaltvorrichtungsgehäuse (1) in einem Längsschlitz geführt ist.

## Claims

1. Manually operated gearshift apparatus for a motor vehicle, comprising a gearshift apparatus housing and a shift lever (3), which at its bottom end has a ball housing (6), which is mounted onto a spherical head (7) of a ball pivot (8) installed in a stationary manner in the gearshift apparatus housing (1) and on which two laterally projecting lever arms (9.1, 9.2) for the connection of in each case one transmission element are integrally formed, wherein ball pivots (15, 16) for the connection of transmission elements are introduced into the lever arms (9.1 and 9.2) and a, to a limited extent, resilient bearing shell (12) as well as a clamping means (13) for influencing the initial tension of the bearing shell (12) are inserted between the spherical head (7) and the ball housing (6) and the stationary ball pivot (8) is fixed in the gearshift apparatus housing by means of at least one isolating element (14) in a tolerance-compensating and vibration-isolating manner relative to the gearshift apparatus housing (1).

2. Manually operated gearshift apparatus for a motor vehicle, comprising a gearshift apparatus housing and a shift lever (3), which at its bottom end has a ball housing (6), which is mounted onto a spherical head (7) of a ball pivot (8) installed in a stationary manner in the gearshift apparatus housing (1) and on which two laterally projecting lever arms (9.1, 9.2) for the connection of in each case one transmission element are integrally formed, wherein ball pivots (15, 16) for the connection of transmission elements are formed on the lever arms (9.1 and 9.2) and a, to a limited extent, resilient bearing shell (12) as well as a clamping means (13) for influencing the initial tension of the bearing shell (12) are inserted between the spherical head (7) and the ball housing (6) and the stationary ball pivot (8) is fixed in the gearshift apparatus housing by means of at least one isolating element (14) in a tolerance-compensating and vibration-isolating manner relative to the gearshift apparatus housing (1).

3. Manually operated gearshift apparatus for a motor vehicle according to claim 1 or 2,
**characterized in that**
the ball housing (6) is locked against rotation about the axis of the stationary ball pivot (8) in that at least one of the two lever arms and/or one of the ball pivots is guided in a longitudinal slot in the gearshift apparatus housing (1).

## Revendications

1. Dispositif manuel de sélection de rapport pour un véhicule, comprenant un boîtier (1) de sélecteur de rapport et un levier (3) de changement de rapport, qui à son extrémité inférieure présente un boîtier (6) de rotule qui est monté sur une rotule (7) d'un tourillon (8) de rotule monté de manière fixe dans le boîtier (1) de sélecteur de rapport et sur lequel deux bras (9.1, 9.2) de levier, s'avançant latéralement pour relier chacun une pièce de transmission, sont formés en une seule pièce, dans lequel des tourillons (15, 16) de rotule sont insérés dans les bras (9.1, 9.2) de levier pour relier les pièces de transmission, une coquille (12) de coussinet d'élasticité limitée ainsi qu'un dispositif élastique (13) influençant la force de sollicitation de la coquille (12) de coussinet sont insérés entre la rotule (7) et le boîtier (6) de rotule, et le tourillon fixe (8) de rotule est fixé dans le boîtier de sélecteur au moyen d'au moins un élément (14) de découplage par rapport au boîtier (1) de sélecteur compensant les tolérances et isolant des vibrations.

2. Dispositif manuel de sélection de rapport pour un véhicule, comprenant un boîtier (1) de sélecteur de rapport et un levier (3) de changement de rapport, qui à son extrémité inférieure présente un boîtier (6) de rotule qui est monté sur une rotule (7) d'un tourillon (8) de rotule monté de manière fixe dans le boîtier (1) de sélecteur de rapport et sur lequel deux bras (9.1, 9.2) de levier, s'avançant latéralement pour relier chacun une pièce de transmission, sont formés en une seule pièce ; dans lequel des tourillons (15, 16) de rotule sont formés sur les bras (9.1, 9.2) de levier pour relier les pièces de transmission, une coquille (12) de coussinet d'élasticité limitée ainsi qu'un dispositif élastique (13) influençant la force de sollicitation de la coquille de coussinet sont insérés entre la rotule (7) et le boîtier (6) de rotule, et le tourillon fixe (8) de rotule est fixé dans le boîtier de sélecteur au moyen d'au moins un élément (14) de découplage par rapport au boîtier (1) de sélecteur compensant les tolérances et isolant des vibrations.

3. Dispositif manuel dé sélection de rapport pour un véhicule selon la revendication 1 ou 2, **caractérisé en ce que** le boîtier (6) de rotule est empêché de tourner autour de l'axe du tourillon fixe (8) de rotule, et en ce qu'au moins un des deux bras de levier ou un des tourillons de rotule est guidé dans une fente longitudinale dans le boîtier (1) de sélecteur de rapport.
